# FASCICULE DE BREVET EUROPEEN

(11) **EP 1 366 970 B1**
(45) Date de publication et mention de la délivrance du brevet: **30.01.2013**
(21) Numéro de dépôt: 03291207.3
(22) Date de dépôt: 22.05.2003
(51) Int. Cl.: B62D 7/09, B66F 9/075

(54) **Dispositif de transmission hydrostatique pour chariot articulé correspondant**
Hydrostatische Antriebsvorrichtung für Gelenktransportwagen
Hydrostatic transmission device for articulated terrain carts

(30) Priorité: 27.05.2002 FR 0206413
(43) Date de publication de la demande: 03.12.2003
(73) Titulaire: MANITOU BF, 44150 Ancenis (FR)
(72) Inventeur: Braud, Marcel-Claude, 44150 Ancenis (FR)
(74) Mandataire: Laget, Jean-Loup

(56) Documents cités:
- EP-A- 1 118 581
- GB-A- 1 092 281
- US-A- 4 157 125

## Description

L'invention est relative à un dispositif de transmission hydrostatique, destiné en particulier à équiper un chariot automoteur à châssis articulé.

L'invention est également relative à un chariot à châssis articulé équipé d'un dispositif de transmission hydrostatique selon l'invention.

Les chariots à châssis articulé selon l'invention, sont particulièrement utiles dans leur application à la manutention à l'intérieur d'espaces de stockage comportant des allées de circulation étroites.

Les documents GB 89 17 414, GB 2 234 214, EP 0 489 874, GB 321 049, GB 2 356 611 et DE 1 049 307 décrivent des chariots à châssis articulé aptes à être utilisés pour la manutention dans des allées étroites. Les châssis de ces chariots sont articulés, de manière à faire pivoter l'extrémité avant de châssis perpendiculairement à l'extrémité arrière de châssis. Cette articulation est de préférence possible dans les deux sens, à droite ou à gauche par rapport au sens de marche avant du chariot.

Pour être utilisables dans les allées les plus étroites possible, ces chariots doivent présenter un rayon de giration le plus faible possible : à cet effet, on peut prévoir d'entraîner des roues intérieure et extérieure au virage selon des vitesses différentes, en prévoyant notamment d'annuler ou de faire tourner une roue dans le sens opposé au sens de rotation de l'autre roue pour réduire le rayon de virage, jusqu'à tourner sur place. Cette variation et ce changement de sens des vitesses des roues motrices peuvent être obtenus sur des chariots à traction électrique en commandant individuellement les moteurs équipant les roues à l'aide de variateurs asservis à l'angle de braquage des chariots.

Cette disposition permet d'utiliser efficacement des chariots à traction électrique pour la manutention dans les lieux de stockage à allées étroites. Cependant, l'utilisation désirable de chariots à moteur à combustion interne s'est avérée à ce jour malcommode, voire impossible, dans ces lieux de stockage à allées étroites.

Un premier but de l'invention est de remédier aux inconvénients de la technique connue, en permettant l'utilisation de chariots à moteur à combustion interne et à transmission hydrostatique dans des lieux de stockage à allées étroites, ce qui permet en outre d'envisager une réduction complémentaire de la largeur des allées, afin d'augmenter la capacité totale des lieux de stockage.

Le document EP 1 118 581 A1 décrit un dispositif de transmission hydraustatique selon le préambule de la revendication 1, installé dans un chariot automoteur à châssis rigide équipé d'un mât télescopique portant une paire de fourches. Ce chariot est pourvu d'une paire de roues avant motrices et d'une paire de roues arrière directrices.

Les roues avant motrices de direction fixe sont entraînées par des moteurs hydrauliques solidaires du châssis. Chaque moteur hydraulique est relié à une pompe hydraulique à débit variable entraînée par le moteur du chariot. Un dispositif de commande électronique reçoit un signal de sens de déplacement, un signal de vitesse de déplacement, un signal de freinage et un signal de braquage du volant de direction pour commander les sens de rotation, et les débits des pompes hydrauliques, de manière à entraîner les moteurs hydrauliques des roues avant en rotation.

Un deuxième but de l'invention est de proposer un nouveau dispositif de transmission hydrostatique de construction simple et économique, en évitant emploi de moyens électroniques de contrôle et de commande.

L'invention a pour objet un dispositif de transmission hydrostatique comprenant au moins une pompe hydrostatique destinée à entraîner au moins un moteur hydraulique ou motoréducteur d'entraînement de roue, chaque pompe hydrostatique étant une pompe à débit variable commandée par des moyens de limitation de débit et d'inversion de débit de pompe hydrostatique, caractérisé en combinaison par le fait que lesdits moyens (12) de limitation de débit et d'inversion de débit de pompe hydrostatique sont des moyens non électroniques d'actionnement et de commande directs du fonctionnement de chaque pompe hydrostatique(9, 10) et par le fait que les moyens (12) de limitation de débit et d'inversion de débit de pompe hydrostatique comportent au moins une valve (15a, 15b) de réduction de pression de pilotage de pompe hydrostatique(9,10), de manière à entraîner la roue (7) en rotation selon une loi prédéterminée pour éviter tout glissement ou ripage latéral de roue lors du braquage.

Selon d'autres caractéristiques alternatives de l'invention :
- les moyens de limitation de débit et d'inversion de débit de pompe hydrostatique comprennent au moins un moyen d'actionnement lié à l'angle de braquage,
- les moyens de limitation de débit et d'inversion de débit de pompe hydrostatique comportent au moins un moyen de commande d'inversion de débit de pompe hydrostatique,
- les moyens de limitation de débit et d'inversion de débit de pompe hydrostatique comportent au moins une came d'actionnement d'un contacteur électromécanique de commande d'inversion de sens de débit de pompe hydrostatique,
- chaque dite came d'actionnement comporte une rampe d'actionnement agissant sur le contacteur électromécanique pour maintenir un débit inversé de pompe hydrostatique,
- les moyens de limitation de débit et d'inversion de débit de pompe hydrostatique comportent au moins une came d'actionnement agissant sur une valve de réduction de pression de pilotage de pompe hydrostatique,

L'invention a également pour objet un chariot automoteur à châssis articulé pourvu d'un dispositif de transmission hydrostatique selon l'invention.

Avantageusement, un chariot à châssis articulé selon l'invention comporte une première partie de châssis apte à pivoter par rapport à une deuxième partie de châssis et un dispositif de transmission hydrostatique selon l'invention pour entraîner en rotation les roues motrices du chariot.

L'invention sera mieux comprise grâce à la description qui va suivre donnée à titre d'exemple non limitatif en référence aux dessins annexés, dans lesquels :
- La figure 1 représente schématiquement, une vue en élévation d'un chariot selon l'invention.
- La figure 2 représente schématiquement, une vue de dessus d'un chariot élévateur selon l'invention.
- La figure 3 représente schématiquement, une courbe donnant le rapport entre la vitesse de roue intérieure au virage et la vitesse de roue extérieure au virage en fonction de l'angle de braquage.
- la figure 4 représente schématiquement, une courbe donnant le rapport entre la vitesse de déplacement du chariot pour un angle de braquage donné et la vitesse de déplacement du chariot en ligne droite, en fonction de l'angle de braquage du chariot.
- La figure 5 représente schématiquement, un agencement d'un chariot selon l'invention équipé d'un dispositif selon l'invention.

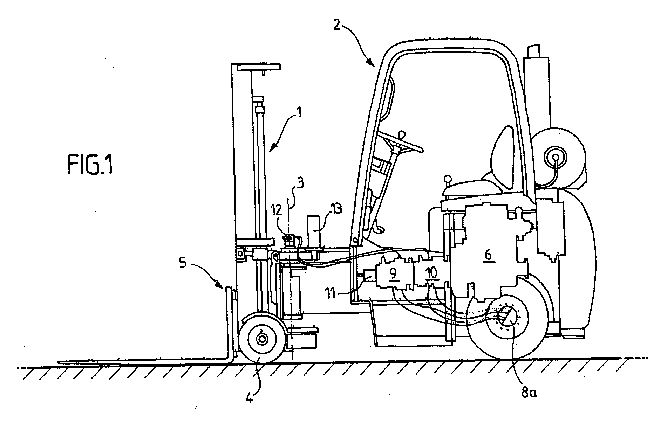

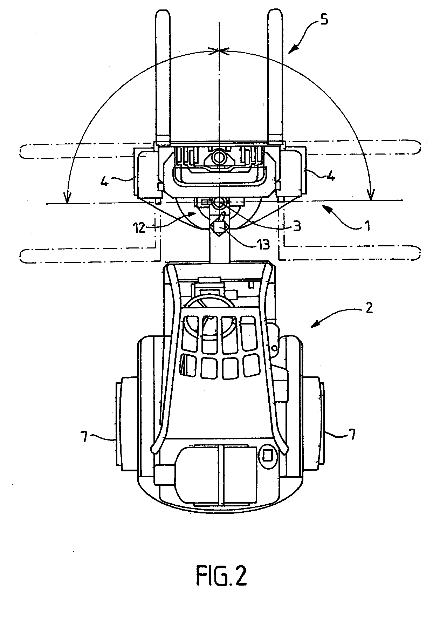

En référence aux figures 1 et 2, les chiffres de référence identiques désignent des éléments identiques ou fonctionnellement équivalents.

Un chariot automoteur à châssis articulé selon l'invention comporte une partie 1 avant de châssis et une partie 2 arrière de châssis articulées l'une à l'autre autour d'un axe 3 sensiblement vertical, de manière à permettre un pivotement de la partie avant 1 par rapport à la partie arrière 2 selon un angle pouvant aller jusqu'à 90°, à droite ou à gauche.

La partie avant 1 de châssis est munie de roues 4 de direction fixe et libres en rotation et supporte des moyens de levage 5, par exemple un mât télescopique équipé de fourches ou moyens équivalents de préhension.

La partie arrière 2 de châssis porte la cabine du conducteur, un moteur 6 à combustion interne et deux roues motrices 7 de direction fixe destinées à être entraînées par la force motrice produite par le moteur 6 à combustion interne.

A cet effet, les roues arrière 7 du chariot peuvent être pourvues de moteurs hydrauliques ou de motoréducteurs 8a, 8b. Le moteur hydraulique ou motoréducteur 8a de la roue arrière gauche est entraîné par une pompe hydrostatique 9, tandis que le motoréducteur ou moteur hydraulique 8b de la roue arrière droite est entraîné par la pompe hydrostatique 10.

Une pompe hydraulique 11 est prévue pour l'actionnement des moyens de levage à l'aide de vérins correspondants et pour l'actionnement de la direction du chariot.

De préférence, les pompes 9, 10 et 11 sont entraînées simultanément par le moteur 6 à combustion interne, et ceci automatiquement dès le démarrage du moteur 6 à combustion interne.

Les pompes 9 et 10 sont reliées à un ensemble 12 destiné à modifier l'entraînement des moteurs hydrauliques 8a, 8b des roues 7 par les pompes hydrostatiques 9 et 10 en fonction de l'angle de braquage du chariot.

Le braquage de la partie avant 1 du chariot par rapport à la partie arrière 2 peut être obtenu par un moteur hydraulique 13 de direction entraînant un pignon agissant sur une couronne dentée solidaire de la partie avant du châssis. D'autres moyens de braquage peuvent être utilisés, sans sortir du cadre de la présente invention, par exemple un ou plusieurs vérins de direction.

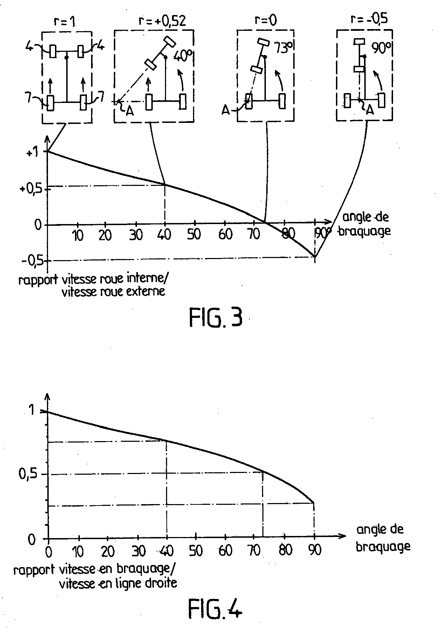

En référence à la figure 3, la courbe caractéristique du rapport entre la vitesse de roue intérieure au virage et la vitesse de roue extérieure au virage en fonction de l'angle de braquage de la partie avant du chariot par rapport à la partie arrière du chariot est représentée sur l'intervalle de 0 à 90°.

Des schémas illustrent respectivement la position du chariot :
- pour un braquage nul,
- pour une valeur angulaire de braquage de 40° autour de l'axe 3,
- pour une valeur angulaire de braquage correspondant à une vitesse nulle de la roue intérieure au virage,
- et pour une valeur angulaire de braquage de 90°.

Pour un braquage nul, lorsque le chariot avance en ligne droite, les roues avant 4 et les roues arrière 7 sont parallèles entre elles. Dans ce cas, la vitesse des roues arrière 7 est identique, ce qui correspond à un rapport entre la vitesse de roue intérieure au virage et la vitesse de roue extérieure au virage égal à 1.

Pour un braquage de 40° autour de l'axe 3, le rapport entre la vitesse de roue intérieure au virage et la vitesse de roue extérieure au virage est égal à 0,52, c'est-à-dire que la roue arrière 7 intérieure au virage, par exemple la roue arrière gauche, tourne à une vitesse égale au produit par 0,52 de la vitesse de la roue extérieure au virage, par exemple la roue arrière droite, de manière que le centre A instantané de rotation se trouve à l'intersection des axes de l'essieu avant et de l'essieu arrière.

Lorsque le braquage se poursuit, le centre A instantané de rotation se déplace sur l'axe de l'essieu arrière jusqu'à se positionner au centre de la roue arrière gauche 7, ce qui correspond à une vitesse nulle de rotation de la roue arrière gauche 7. Dans l'exemple représenté, la roue arrière gauche est immobile pour un angle de braquage d'environ 73°, et le chariot pivote dans cette position de braquage autour de cette roue arrière gauche.

Lorsque le braquage continue au-delà de la valeur précédente, le centre instantané A de rotation se déplace entre les deux roues arrière 7, ce qui conduit à entraîner les roues arrière dans des sens opposés.

Dans l'exemple représenté, dans la situation de braquage à 90°, la roue arrière gauche est entraînée en sens inverse de la roue arrière droite 7 à une vitesse deux fois inférieure, ce qui correspond à un rapport algébrique négatif de - 0,5.

Le respect de la courbe de la figure 3 permet d'obtenir un déplacement du chariot sans ripage ou déplacement latéral des roues, ce qui évite des glissements empêchant une conduite précise, et évite une usure anormale des pneumatiques.

La courbe de la figure 3 est donnée à titre purement indicatif, et dépend des caractéristiques dimensionnelles du chariot, en particulier de la distance entre l'axe passant par les centres des roues avant 4 et l'axe de pivotement 3 ; de la distance entre l'axe passant par les centres des roues arrière 7 et l'axe 3 de pivotement, et de la position géométrique des roues arrière par rapport à l'axe longitudinal médian du chariot ou de la voie arrière du chariot dans le cas d'un chariot symétrique par rapport à cet axe médian longitudinal.

La courbe pourrait également être étendue à des angles de braquage supérieurs à 90°, en particulier jusqu'à l'angle de braquage correspondant à une position du centre instantané de rotation au centre de l'essieu arrière ou au milieu du segment joignant les centres des roues arrière 7.

En référence à la figure 4, une courbe donnant le rapport entre la vitesse de déplacement du chariot pour un angle de braquage donné et la vitesse de déplacement du chariot en ligne droite est représentée en fonction de l'angle de braquage du chariot, sur l'intervalle de 0 à 90°.

La vitesse de déplacement du chariot pour un angle de braquage donné est égale à la demi-somme de la vitesse de roue intérieure au virage et de la vitesse de roue extérieure au virage en fonction de l'angle de braquage de la partie avant de chariot par rapport à la partie arrière de chariot. La vitesse de déplacement du chariot pour un angle de braquage donné peut par conséquent être calculée en fonction de la vitesse de roue extérieure au virage à partir de la courbe de la figure 3 ; et la figure 4 peut par conséquent être déduite point par point de la figure 3.

Pour un braquage nul, lorsque le chariot avance en ligne droite, les roues avant 4 et les roues arrière 7 sont parallèles entre elles. Dans ce cas, la vitesse des roues arrière 7 est identique, ce qui correspond à un rapport entre la vitesse de roue intérieure au virage et la vitesse de roue extérieure au virage égal à 1 ; et à un rapport entre la vitesse de déplacement du chariot pour un angle de braquage nul et la vitesse de déplacement du chariot en ligne droite défini comme égal à 1.

Pour un braquage de 40° autour de l'axe 3, le rapport entre la vitesse de roue intérieure au virage et la vitesse de roue extérieure au virage est égal à 0,52, c'est-à-dire que la roue arrière 7 intérieure au virage, par exemple la roue arrière gauche, tourne à une vitesse égale au produit par 0,52 de la vitesse de la roue extérieure au virage ; et à un rapport entre la vitesse de déplacement du chariot pour un angle de braquage de 40° et la vitesse de déplacement du chariot en ligne droite calculable comme égal à 0.76.

Lorsque le braquage se poursuit, le centre A instantané de rotation se déplace sur l'axe de l'essieu arrière jusqu'à se positionner au centre de la roue arrière gauche 7, ce qui correspond à une vitesse nulle de rotation de la roue arrière gauche 7; et à un rapport entre la vitesse de déplacement du chariot pour un angle de braquage de 73° et la vitesse de déplacement du chariot en ligne droite calculable comme égal à 0.5.

Lorsque le braquage continue au-delà de la valeur précédente, le centre instantané A de rotation se déplace entre les deux roues arrière 7, ce qui conduit à entraîner les roues arrière dans des sens opposés.

Dans l'exemple représenté, dans la situation de braquage à 90°, la roue arrière gauche est entraînée en sens inverse de la roue arrière droite 7 à une vitesse deux fois inférieure, ce qui correspond à un rapport algébrique négatif de - 0,5; et à un rapport entre la vitesse de déplacement du chariot pour un angle de braquage de 90° et la vitesse de déplacement du chariot en ligne droite calculable comme égal à 0.25.

Le respect de la courbe de la figure 3 permet d'obtenir ainsi, comme représenté à la figure 4, une réduction « naturelle » de vitesse de déplacement du chariot en fonction de l'angle de braquage du chariot, ce qui évite une instabilité du chariot en virage.

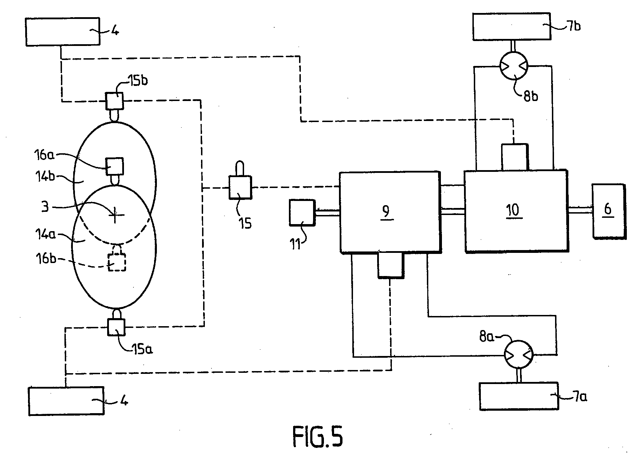

En référence à la figure 5, les éléments identiques ou fonctionnellement équivalents aux éléments des figures 1 et 2 sont repérés par des chiffres de référence identique aux chiffres des figures 1 et 2.

Le dispositif selon l'invention comporte de manière connue en soi une valve AL de réduction de la pression de pilotage pour permettre une approche lente (« inching » pour les spécialistes) du chariot, même avec un moteur au régime maximal. Cette valve d'approche lente AL de type connu en soi est actionnée de préférence par une pédale ou un levier d'approche lente.

Le dispositif comporte également deux cames concentriques à l'axe de pivotement 3 : une première came 14a de commande de la roue arrière gauche 7a et une deuxième came 14b de commande de la roue arrière droite 7b.

La came 14a agit simultanément sur une valve 15a de réduction de pression de pilotage de la pompe 9 hydrostatique, et sur un contacteur 16a électromécanique apte à inverser le débit de la pompe hydrostatique 9 au passage à vitesse d'entraînement nulle de la roue arrière gauche 7a, conformément à la courbe de la figure 3.

De manière analogue, la deuxième came 14b commande la valve 15b de réduction de pression de pilotage de la pompe hydrostatique 10 et déclenche le contacteur électromécanique 16b d'inversion du sens du débit de la pompe hydrostatique 10.

Ainsi, à l'aide d'une seule came par roue arrière 7 entraînée, on peut agir simultanément sur la vitesse et le sens d'entraînement de cette roue arrière 7 pour respecter les courbes de direction et de vitesse limite décrites en référence aux figures 3 et 4.

Les cames 14a et 14b sont symétriques l'une de l'autre par rapport à un plan médian passant par l'axe longitudinal 3. Pour un angle de braquage nul, les pressions de sortie des valves 15a et 15b sont identiques et de préférence égales à la pression d'entrée, de manière à faire tourner les deux roues arrière 7 a et 7b à la même vitesse. Lors d'un braquage dans un sens prédéterminé, la pression de pilotage correspondant à la roue intérieure au virage est réduite conformément à la courbe de la figure 3, tandis que la pression de sortie de l'autre valve de régulation de l'autre pompe hydrostatique reste égale à la pression d'entrée.

L'actionnement d'un contacteur électrique 16a ou 16b correspondant à la montée sur une rampe d'une came 14a ou 14b provoque l'inversion du débit de la pompe hydrostatique correspondante et l'inversion du sens de rotation de la roue arrière correspondante, tout en respectant les limites de vitesse correspondant à la courbe B de la figure 4.

De préférence on utilise comme pompe hydrostatique 9 ou 10 une pompe à plateau incliné, dont la modification de l'inclinaison permet de varier le débit délivré par la pompe jusqu'à l'annuler. L'inversion de l'inclinaison du plateau de la pompe permet d'obtenir un débit en sens inverse du débit précédent.

Bien entendu, l'invention est applicable à toute pompe hydrostatique à débit variable, qu'elle soit ou non à plateau incliné.

L'invention décrite en référence à des modes de réalisation particuliers n'y est nullement limitée, mais couvre au contraire toute modification de forme et de variante de réalisation dans le cadre et l'esprit de l'invention.

Ainsi, on peut prévoir, par exemple dans le cas d'un chariot dissymétrique, une courbe de braquage à droite différente de la courbe de braquage à gauche. Egalement, on peut prévoir une consigne de vitesse limite de marche arrière différente de la consigne de vitesse limite en marche avant.

## Revendications

1. Dispositif de transmission hydrostatique, comprenant au moins une pompe hydrostatique (9, 10) destinée à entraîner au moins un moteur hydraulique ou motoréducteur (8a, 8b) d'entraînement de roue (7), chaque pompe hydrostatique (9, 10) étant une pompe à débit variable commandée par des moyens (12) de limitation de débit et d'inversion de débit de pompe hydrostatique (9, 10), caractérisé en combinaison par le fait que lesdits moyens (12) de limitation de débit et d'inversion de débit de pompe hydrostatique sont des moyens non électroniques d'actionnement et de commande directs du fonctionnement de chaque pompe hydrostatique (9, 10) et par le fait que les moyens (12) de limitation de débit et d'inversion de débit de pompe hydrostatique comportent au moins une valve (15a, 15b) de réduction de pression de pilotage de pompe hydrostatique (9, 10), de manière à entraîner la roue (7) en rotation selon une loi prédéterminée pour éviter tout glissement ou ripage latéral de roue lors du braquage.

2. Dispositif selon la revendication 1, **caractérisé par le fait que** les moyens (12) de limitation de débit et d'inversion de débit de pompe hydrostatique (9, 10) comprennent au moins un moyen (14a, 14b) d'actionnement lié à l'angle de braquage.

3. Dispositif selon la revendication ou 2, **caractérisé par le fait, que** les moyens (12) de limitation de débit et d'inversion de débit de pompe hydrostatique (9, 10) comportent au moins un moyen (16a, 16b) de commande d'inversion de débit de pompe hydrostatique (9, 10).

4. Dispositif selon la revendication 2 et la revendication 3, **caractérisé par le fait que** les moyens (12) de limitation de débit et d'inversion de débit de pompe hydrostatique comportent au moins une came (14a, 14b) d'actionnement d'un contacteur (16a, 16b) électromécanique de commande d'inversion de sens de débit de pompe hydrostatique.

5. Dispositif selon la revendication 4, **caractérisé par le fait que** chaque dite came (14a, 14b) d'actionnement comporte une rampe d'actionnement agissant sur le contacteur (16a, 16b) électromécanique pour maintenir un débit inversé de pompe hydrostatique.

6. Dispositif selon la revendication 2, **caractérisé par le fait que** les moyens (12) de limitation de débit et d'inversion de débit de pompe hydrostatique comportent au moins une came (14a, 14b) d'actionnement agissant sur une valve (15a, 15b) de réduction de pression de pilotage de pompe hydrostatique (9, 10).

7. Chariot à châssis articulé, comportant une première partie (1) de châssis apte à pivoter par rapport à une deuxième partie de châssis et muni d'un dispositif de transmission hydrostatique selon l'une quelconque des revendications 1 à 6 pour entraîner en rotation les roues motrices (7) du chariot.

## Claims

1. A hydrostatic transmission device, comprising at least one hydrostatic pump (9, 10) designed to drive at least one hydraulic motor or gear motor (8a, 8b) for driving a wheel (7), each hydrostatic pump (9, 10) being a variable-displacement pump controlled by means (12) limiting the flow and controlling the direction of the hydrostatic pump (9, 10), **characterized in** combination by the fact that said means (12) limiting the flow and controlling the direction of the hydrostatic pump are non-electronic means for direct actuating and control of the operation of each hydrostatic pump, and by the fact that the means (12) limiting the flow and controlling the direction of the hydrostatic pump include at least one valve (15a, 15b) for reducing the driving pressure of a hydrostatic pump (9, 10), so as to rotate the wheel (7) according to a predetermined law to prevent any slipping or skidding of the wheel during turning.

2. The device according to claim 1, **characterized in that** the means (12) limiting the flow and controlling the direction of the hydrostatic pump (9, 10) comprise at least one actuating means (14a, 14b) connected to the turning angle.

3. The device according to claim 1 or 2, **characterized in that** the means (12) limiting the flow and controlling the direction of the hydrostatic pump (9, 10) include at least one means (16a, 16b) for controlling the hydrostatic pump (9, 10) flow inversion.

4. The device according to claim 2 and claim 3, **characterized in that** the means (12) limiting the flow and controlling the direction of the hydrostatic pump include at least one cam (14a, 14b) for actuating an electromechanical contactor (16a, 16b) for controlling an inversion of the direction of the hydrostatic pump flow.

5. The device according to claim 4, **characterized in that** said actuating cam (14a, 14b) includes an actuating ramp acting on the electromechanical contactor (16a, 16b) to maintain an inverted hydrostatic pump flow.

6. The device according to claim 2, **characterized in that** the means (12) limiting the flow and controlling the direction of the hydrostatic pump include at least one actuating cam (14a, 14b) acting on a valve (15a, 15b) for reducing the driving pressure of the hydrostatic pump (9, 10).

7. A cart with an articulated chassis, including a first chassis portion (1) capable of pivoting relative to a second chassis portion and provided with a hydrostatic transmission device according to any one of claims 1 to 6 to rotate the driving wheels (7) of the cart.

## Patentansprüche

1. Hydrostatische Übertragungsvorrichtung, die mindestens eine hydrostatische Pumpe (9, 10) umfasst, die dazu bestimmt ist, mindestens einen hydraulischen Motor oder Getriebemotor (8a, 8b) anzutreiben, der ein Rad (7) antreibt, wobei jede hydrostatische Pumpe (9, 10) eine Regelpumpe ist, die von Mitteln (12) zur Begrenzung des Durchsatzes und Umkehr des Durchsatzes der hydrostatischen Pumpe (9, 10) gesteuert wird, gekennzeichnet in Kombination dadurch, dass die Mittel (12) zur Begrenzung des Durchsatzes und Umkehr des Durchsatzes der hydrostatischen Pumpe direkte nicht elektrische Betätigungs- und Steuermittel der Funktion jeder hydrostatischen Pumpe (9, 10) sind und dadurch, dass die Mittel (12) zur Begrenzung des Durchsatzes und Umkehr des Durchsatzes der hydrostatischen Pumpe mindestens ein Ventil (15a, 15b) zur Minderung des Steuerdrucks der hydrostatischen Pumpe (9, 10) aufweisen, um das Rand (7) gemäß einem vorbestimmten Gesetz rotierend anzutreiben, um jedes Gleiten oder seitliches Rutschen des Rads beim Einschlagen zu vermeiden.

2. Vorrichtung nach Anspruch 1, **dadurch gekennzeichnet, dass** die Mittel (12) zur Begrenzung des Durchsatzes und Umkehr des Durchsatzes der hydrostatischen Pumpe (9, 10) mindestens ein Betätigungsmittel (14a, 14b) umfassen, das mit dem Einschlagwinkel verbunden ist.

3. Vorrichtung nach Anspruch 1 oder 2, **dadurch gekennzeichnet, dass** die Mittel (12) zur Begrenzung des Durchsatzes und Umkehr des Durchsatzes der hydrostatischen Pumpe (9, 10) mindestens ein Mittel (16a, 16b) zur Steuerung der Umkehr des Durchsatzes der hydrostatischen Pumpe (9, 10) aufweisen.

4. Vorrichtung nach Anspruch 2 und Anspruch 3, **dadurch gekennzeichnet, dass** die Mittel (12) zur Begrenzung des Durchsatzes und Umkehr des Durchsatzes der hydrostatischen Pumpe (9, 10) mindestens einen Betätigungsnocken (14a, 14b) eines elektromechanischen Schalters (16a, 16b) zur Steuerung der Umkehr der Durchsatzrichtung der hydrostatischen Pumpe aufweisen.

5. Vorrichtung nach Anspruch 4, **dadurch gekennzeichnet, dass** jeder Betätigungsnocken (14a, 14b) eine Betätigungsrampe aufweist, die auf den elektromechanischen Schalter (16a, 16b) einwirkt, um einen umgekehrten Durchsatz der hydrostatischen Pumpe aufrechtzuerhalten.

6. Vorrichtung nach Anspruch 2, **dadurch gekennzeichnet, dass** die Mittel (12) zur Begrenzung des Durchsatzes und Umkehr des Durchsatzes der hydrostatischen Pumpe (9, 10) mindestens einen Betätigungsnocken (14a, 14b) aufweisen, der auf ein Ventil (15a, 15b) zur Reduzierung des Steuerdrucks der hydrostatischen Pumpe einwirkt.

7. Wagen mit angelenktem Rahmen, der einen ersten Rahmenabschnitt (1) aufweist, der imstande ist, im Verhältnis zu einem zweiten Rahmenabschnitt zu schwenken, und mit einer hydrostatischen Übertragungsvorrichtung nach einem der Ansprüche 1 bis 6 ausgestattet ist, um die Antriebsräder (7) des Wagens rotierend anzutreiben.
